# NOUVEAU FASCICULE DE BREVET EUROPEEN

(11) **EP 2 927 570 B2**
(45) Date de publication et mention de la décision concernant l'opposition: **21.10.2026**
(45) Mention de la délivrance du brevet: 23.12.2020
(21) Numéro de dépôt: 15161917.8
(22) Date de dépôt: 31.03.2015
(51) Int. Cl.: F21S 41/24, F21S 43/14, F21S 43/20, F21S 43/237, F21S 43/245, F21S 43/247, F21S 43/40, B29C 45/16, B29C 45/00, F21V 8/00

(54) **GUIDE DE LUMIÈRE COMPORTANT UNE SURFACE DE SORTIE RECOUVERTE DE MATIÈRE DIFUSANTE**
LICHTWELLENLEITER, DER EINE AUSTRITTSOBERFLÄCHE UMFASST, DIE MIT LICHTSTREUENDEM MATERIAL BEDECKT IST
LIGHT GUIDE HAVING AN OUTPUT SURFACE COVERED WITH DIFFUSING MATERIAL

(30) Priorité: 31.03.2014 FR 1452811
(43) Date de publication de la demande: 07.10.2015
(73) Titulaire: VALEO VISION, 93012 Bobigny Cedex (FR)
(72) Inventeur: Germon, François, 49320 Vauchrétien (FR); Doha, Jean-François, 49124 Saint Barthélémy d'Anjou (FR); Godbillon, Vincent, 75011 Paris (FR)
(74) Mandataire: Valeo Visibility

(56) Documents cités:
- EP-A1- 1 376 003
- EP-A1- 2 322 962
- EP-A1- 2 450 726
- EP-A2- 2 105 655
- EP-B1- 2 954 509
- WO-A1-2008/016978
- DE-A1- 10 333 316
- DE-A1- 102007 057 941
- DE-A1- 102011 016 402
- DE-B4- 102004 054 732
- FR-A1- 2 853 045

## Description

L'invention concerne le domaine des dispositifs d'éclairage ou de signalisation comprenant un guide optique, et destinés par exemple aux véhicules automobiles.

L'invention s'intéresse également au procédé de fabrication de ces dispositifs.

Les guides optiques sont couramment utilisés pour amener une quantité de lumière au niveau d'une surface éclairante du dispositif d'éclairage ou de signalisation d'un véhicule automobile. Ces surfaces éclairantes peuvent elles-mêmes avoir des formes variées de manière à s'adapter aux exigences de style.

Par guide optique ou guide de lumière, on entend ici une pièce transparente ou translucide à l'intérieur de laquelle des rayons lumineux se déplacent de manière contrôlée suivant une direction générale commune depuis une première extrémité du guide comportant une surface d'entrée à proximité de laquelle sont disposées une ou plusieurs sources, jusqu'à une surface de sortie d'où les rayons lumineux émergent, de telle manière qu'un observateur a l'impression que la zone de sortie est éclairée et correspond à une source lumineuse.

En fonction du positionnement de la source lumineuse et de la surface de sortie, la propagation de la lumière se fait directement ou par réflexions internes successives des rayons lumineux sur les faces du guide de lumière appelées faces de réflexions internes.

La surface de sortie peut être formée par la face ou la section opposée à la face d'entrée ou encore par une face latérale du guide de lumière.

La longueur du guide de lumière, ainsi que la forme et la taille des sections du guide sont définies par le concepteur du dispositif d'éclairage en fonction des contraintes esthétiques et techniques.

On observe toutefois que l'intensité lumineuse est susceptible de varier entre deux points distincts de la zone de sortie. Ceci s'explique en grande partie par le fait que les sources de lumière sont en général ponctuelles et n'éclairent pas de manière homogène toute la section de la face d'entrée.

Pour réduire ces variations, les sources de lumière peuvent utilement être associées à des moyens de diffusion tels que des éléments réfléchissants paraboliques pour élargir la taille du faisceau entrant.

Une autre solution consiste à multiplier le nombre de sources de lumière en ajustant leur répartition.

La zone de sortie peut également comporter des hétérogénéités dont les motifs sont agencés selon des critères esthétiques, de telle sorte que les rayons qui atteignent la zone de sortie selon un certain angle émergent vers l'extérieur comme si les hétérogénéités étaient elles-mêmes des sources de lumière.

Les documents EP2105655 et WO2008/016978 proposent comme solution d'appliquer un film diffusant sur la surface de sortie du guide de lumière. Cette solution a pour défaut d'être restreinte à des surfaces planes ou développables, sur lesquelles un tel film peut être appliqué de façon régulière et homogène, sans risquer la formation de plis ou de bulles d'air. En outre, la maitrise industrielle d'un procédé de dépose de film reste délicate, avec les contraintes liées à la manipulation d'un film adhésif.

L'invention a pour objet d'apporter une solution alternative ou complémentaire aux dispositifs exposés ci-dessus, facile et peu onéreuse à mettre en œuvre, et qui a pour but d'homogénéiser l'intensité de la lumière au niveau de la zone de sortie.

Le dispositif d'éclairage ou de signalisation selon l'invention, destiné notamment aux véhicules automobiles, comprend :
- un guide de lumière comportant un bloc transparent ou translucide comprenant une surface d'entrée et une surface de sortie de la lumière,
- une ou plusieurs sources lumineuses situées en vis-à-vis de la surface d'entrée de la lumière.

Ce dispositif est du type dans lequel les rayons émis par la source lumineuse pénètrent dans le bloc transparent au niveau de la surface d'entrée de la lumière et se propagent directement ou par réflexions successives sur les parois du bloc transparent vers la surface de sortie au travers de laquelle ils émergent.

Le dispositif selon l'invention se caractérise en ce que la surface de sortie est recouverte d'une couche surmoulée sur une partie du bloc transparent, ladite couche étant composée d'un matériau diffusant la lumière qui comprend une matrice translucide dont la matière est identique à celle du bloc transparent. Par matériau diffusant, on entend selon l'invention un matériau transparent qui présente un haze supérieur à 30%, mesuré selon la norme ASTM D 1003, le haze correspondant au phénomène de diffusion ou dispersion de la lumière qui passe à travers un matériau transparent, entraînant une mauvaise visibilité et / ou l'éblouissement. Préférentiellement, le matériau diffusant présente un haze supérieur à 60%, plus préférentiellement supérieur à 70%.

La couche de matière diffusante permet ainsi de réduire les inhomogénéités d'intensité lumineuse et de masquer les surbrillances locales liées à la position des sources de lumière.

Selon une première alternative la couche de matériau diffusant est d'épaisseur constante.

Selon une seconde alternative, la couche de matériau diffusant est d'épaisseur variable.

De même, la couche de matériau diffusant peut recouvrir la totalité ou seulement une partie de la surface de sortie.

Préférentiellement, la couche de matériau diffusant a une épaisseur inférieure à 10 mm et préférentiellement inférieure à 5 mm.

L'invention s'intéresse également au procédé de fabrication d'un dispositif d'éclairage tel que décrit ci-dessus et comprend les étapes au cours desquelles :
- on injecte la matière formant le bloc transparent, puis
- on surmoule par injection une couche de matériau diffusant d'épaisseur donnée sur tout ou partie de la surface de sortie.

Préférentiellement, le procédé de fabrication prévoit les étapes au cours desquelles :
- on injecte la matière formant le bloc transparent dans un premier moule ou une première cavité d'un moule rotatif puis,
- on transfère le bloc ainsi formé dans un second moule, ou respectivement une seconde cavité dudit moule rotatif, et on injecte une couche de matière diffusante sur tout ou partie de la surface de sortie.

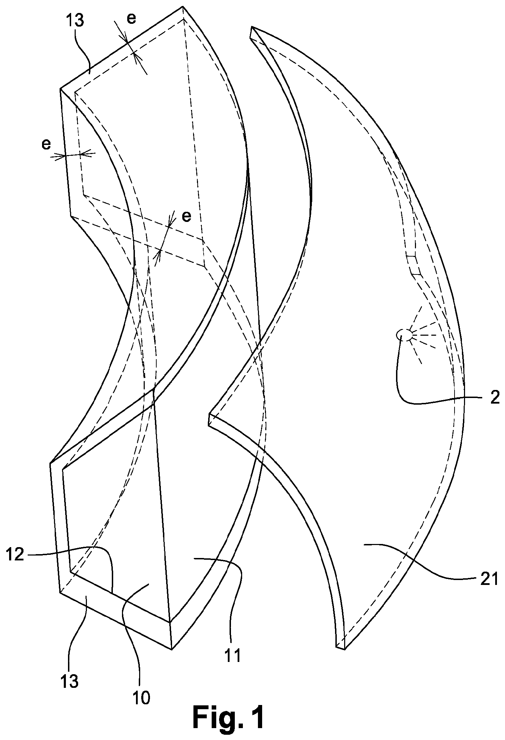

L'invention sera mieux comprise à la lecture de la figure 1 unique annexée, qui est fournie à titre d'exemple et ne présente aucun caractère limitatif, et qui représente une vue en perspective d'un dispositif selon l'invention comportant une surface de sortie recouverte d'une couche de matériau diffusant.

Le dispositif illustré à la figure 1 unique, illustre un dispositif d'éclairage comprenant un bloc 10 réalisé en matériau transparent et formant un guide de lumière. Il peut être coloré ou non.

Afin de canaliser la lumière, le bloc transparent 10 est constitué d'une matière telle que du plastique transparent ayant un indice de réfraction plus élevé que le milieu ambiant, en règle générale que l'air ambiant, dans lequel il est destiné à être immergé.

Les matériaux couramment employés pour de telles applications sont des polymères, généralement thermoplastiques, choisis préférentiellement dans le groupe constitué par les polymères ou les copolymères amorphes tels que les polyacryliques, les polyesters, les polycarbonates, les polyéthers sulfones ou poly set époxy siloxanes et les polymères d'oléfines cycliques. Certains de ces polymères, tel que le polymétacrylate de méthyle, ont un aspect translucide très prononcé et cristallin, et sont connus sous l'appellation de plastique cristal, particulièrement recherché pour les effets de style qu'ils permettent d'obtenir.

Le bloc 10 comprend une face arrière 11, formant la surface d'entrée de la lumière, et une surface de sortie 12, constituée ici des faces avant et latérales supérieures et inférieures du bloc 10.

Cette forme de réalisation n'est pas limitative, et la lumière peut cheminer selon une direction générale commune sur une distance plus importante entre la surface d'entrée et la surface de sortie, comme c'est souvent le cas pour les guides de lumière destinés aux dispositifs de signalisation.

De même, la surface de sortie peut être une face opposée à la surface d'entrée ou encore une face latérale du guide de lumière dont l'orientation est alors sensiblement parallèle à une direction générale commune de progression des rayons lumineux depuis la surface d'entrée vers la surface de sortie.

Le dispositif illustré à la figure 1 comprend une source de lumière 2 disposée en vis-à-vis de la surface d'entrée 11. Cette source de lumière est associée, dans le cas faisant l'objet de la présente description, à un miroir parabolique 21 permettant une meilleure répartition du faisceau lumineux dans l'espace.

Chaque rayon lumineux admis dans le guide de lumière par la surface d'entrée 11 atteint une paroi interne du guide de lumière en faisant un angle donné par rapport à la normale de la surface atteinte. Lorsque cet angle est supérieur à un angle de seuil déterminé, il est réfléchi à l'intérieur du guide de lumière. Les rayons lumineux se propagent alors dans le guide de lumière par réflexions successives sur les parois internes pour arriver vers la surface de sortie 12 au niveau de laquelle on s'arrange pour qu'ils atteignent les parois internes avec un angle d'incidence avec la normale inférieur à la valeur de seuil, de sorte qu'ils émergent vers l'extérieur du dispositif.

La surface de sortie 12 du dispositif de la figure 1 est recouverte par une couche 13 surmoulée sur une partie du bloc transparent, ladite couche étant réalisée à partir d'un matériau diffusant. Selon l'invention, il s'agit d'un matériau polymère transparent qui présente un haze supérieur à 30%, mesuré selon la norme ASTM D 1003. Préférentiellement, le matériau diffusant présente un haze supérieur à 60%, plus préférentiellement supérieur à 70%.

Selon l'invention, la couche 13 de matériau diffusant comprend une matrice translucide, qui peut être de même nature que celle des matériaux décrits ci-dessus servant à réaliser le bloc translucide du guide de lumière 10, et qui contient des nanoparticules sur lesquelles la lumière est réfléchie selon des directions aléatoires et de manière anisotrope, de sorte que la lumière traversant la couche de matériau diffusant est renvoyée de façon plus homogène. Selon l'invention, la matière de la matrice translucide de la couche 13 est identique à celle du bloc transparent 10. Les matières étant identiques, on assure ainsi des conditions optimales pour la réalisation et la maitrise du surmoulage par injection de la couche 13 sur la surface de sortie 12 du bloc.

Par nanoparticule, on entend ici une particule ayant, dans un repère orthonormé, une de ses dimensions inférieure à 100nm, et une taille comprise entre 2 et 1000nm, et plus préférentiellement comprise entre 2 et 200 nm. La taille étant la grandeur des deux autres dimensions de la nano particule. Les nanoparticules ont de préférence une forme polyédrique ou sphérique.

Ces nanoparticules peuvent utilement être de deux types :
- Un premier type de particule permet la diffusion de la lumière par réflexion totale des rayons lumineux incidents sur leur surface. Il s'agit alors de nanoparticules de nature organique telles que des nanostructures de carbone ou inorganiques tes que des nanocristaux, en particulier des nanocristaux d'oxydes métalliques.
- Un deuxième type de nanoparticules émet de la lumière suite à leur excitation par un rayon lumineux incident. Il s'agit alors de particules nanométriques telles que des quantums dots, de l'ordre de 2 à 10 nm, comportant un noyau semiconducteur, généralement modifié chimiquement en surface.

La densité des nanoparticules dans la matrice en matière transparente permet de contrôler l'homogénéité de la lumière émise ou diffusée.

La couche externe de matière diffusante est de préférence de faible épaisseur, pour éviter en particulier la perte d'intensité lumineuse dans la direction privilégiée vers laquelle est orienté le dispositif d'éclairage ou de signalisation.

L'épaisseur e du bandeau est mesurée ici selon une direction perpendiculaire à la surface de sortie 12 au point où la mesure d'épaisseur est effectuée.

En pratique, la couche de matériau diffusant 13 a une épaisseur e inférieure à 10mm et préférentiellement inférieure à 5 mm.

Il peut également s'avérer utile de faire varier ladite épaisseur e de manière à moduler les effets de diffusion en fonction de la localisation des sources de lumière.

De même, il est tout à fait possible de prévoir une couche de matière diffusante ne recouvrant qu'une partie seulement de la surface de sortie.

Ces considérations sont guidées par les initiatives des stylistes qui vont chercher à homogénéiser la lumière sortant du dispositif d'éclairage, et à obtenir de surcroit des effets de halo permettant de masquer la position de la source de lumière.

La fabrication d'un dispositif d'éclairage selon l'invention peut utilement se faire par injection. Ceci est possible lorsque le matériau utilisé est de nature thermoplastique ou que le nombre de matériaux de base utiles à la polymérisation est réduit. La couche de matière diffusante est alors surmoulée sur la partie du bloc en matière transparente formant la surface de sortie.

L'avantage de ce procédé est qu'il permet d'obtenir un dispositif composé d'un bloc transparent dont la surface de sortie est recouverte d'une couche de matériau diffusant ne formant qu'une seule pièce, permettant ainsi de réduire les pertes lumineuses liées aux coefficients de Fresnel au niveau de l'interface entre le bloc transparent et la couche en matériau diffusant.

On peut alors réaliser le dispositif d'éclairage en injectant dans un premier moule, ou une première cavité d'un moule rotatif, la matière transparente.

Puis on transfère ce bloc en matière transparente dans un second moule, ou bien respectivement on opère une rotation du moule rotatif et on place ledit bloc dans une seconde cavité dudit moule rotatif, et on injecte la matière diffusante sur la surface externe de la surface de sortie.

Le mode de réalisation de l'invention servant de base à la présente description, ainsi que le procédé d'injection, tels que décrits ci-dessus, ne sont pas limitatifs, pour autant qu'ils permettent d'obtenir les effets techniques tels qu'exposés et revendiqués.

## Revendications

1. Dispositif d'éclairage ou de signalisation, notamment pour véhicule automobile, comprenant :
- un guide de lumière comportant un bloc transparent ou translucide (10), comprenant une surface d'entrée (11) et une surface de sortie de la lumière (12),
- une ou plusieurs sources lumineuses (2) situées en vis-à-vis de la surface d'entrée (11) de la lumière,
du type dans lequel les rayons émis par la source lumineuse pénètrent dans le bloc transparent (10) au niveau de la surface d'entrée (11) de la lumière et se propagent directement ou par réflexions successives sur les parois du bloc transparent vers la surface de sortie (12) au travers de laquelle ils émergent,
**caractérisé en ce que** la surface de sortie (12) est recouverte d'une couche (13) surmoulée sur une partie du bloc transparent (10), ladite couche (13) étant composée d'un matériau diffusant la lumière qui comprend une matrice translucide dont la matière est identique à celle du bloc transparent (10).

2. Dispositif selon la revendication 1, dans lequel la couche de matériau diffusant est d'épaisseur (e) constante.

3. Dispositif selon la revendication 1, dans lequel la couche de matériau diffusant est d'épaisseur (e) variable.

4. Dispositif selon l'une des revendications 1 à 3, dans lequel la couche de matériau diffusant (13) recouvre la totalité de la surface de sortie (12).

5. Dispositif selon l'une des revendications 1 à 3, dans lequel la couche de matériau diffusant (13) recouvre partiellement seulement la surface de sortie (12).

6. Dispositif selon l'une des revendications 1 à 5, dans lequel la couche de matériau diffusant (13) a une épaisseur (e) inférieure à 10mm et préférentiellement inférieure à 5 mm.

7. Procédé de fabrication d'un dispositif d'éclairage selon l'une des revendications 1 à 6, dans lequel :
- on injecte la matière formant le bloc transparent (10), puis
- on surmoule par injection une couche (13) de matériau diffusant d'épaisseur donnée (e) sur tout ou partie de la surface de sortie (12).

8. Procédé de fabrication selon la revendication7, dans lequel :
- on injecte la matière formant le bloc transparent (10) dans un premier moule ou une première cavité d'une moule rotatif puis,
- on transfère le bloc (10) ainsi formé dans un second moule ou respectivement dans une seconde cavité dudit moule rotatif, et on injecte une couche de matière diffusante (13) sur tout ou partie de la surface de sortie (12).

## Patentansprüche

1. Beleuchtungs- oder Signaleinrichtung, insbesondere für Kraftfahrzeuge, bestehend aus :
- einen Lichtleiter mit einem transparenten oder transluzenten Block (10), der eine Lichteintrittsfläche (11) und eine Lichtaustrittsfläche (12) aufweist,
- eine oder mehrere Lichtquellen (2), die sich gegenüber der Lichteintrittsfläche (11) befinden, von der Art, bei der die von der Lichtquelle ausgesandten Strahlen an der Lichteintrittsfläche (11) in den transparenten Block (10) eindringen und sich direkt oder durch aufeinanderfolgende Reflexionen an den Wänden des transparenten Blocks in Richtung der Austrittsfläche (12) ausbreiten, durch die sie austreten,
**dadurch gekennzeichnet, dass** die Austrittsfläche (12) mit einer Schicht (13) bedeckt ist, die auf einen Teil des transparenten Blocks (10) aufgeformt ist, wobei die genannte Schicht (13) aus einem lichtstreuenden Material besteht, das eine lichtdurchlässige Matrix umfasst, deren Material mit dem des transparenten Blocks (10) identisch ist.

2. Vorrichtung nach Anspruch 1, bei der die Schicht (13) aus lichtstreuendem Material von konstanter Dicke (e) ist.

3. Vorrichtung nach Anspruch 1, bei der die Schicht (13) aus lichtstreuendem Material von variabler Dicke (e) ist.

4. Vorrichtung nach einem der Ansprüche 1 bis 3, wobei die Schicht (13) aus lichtstreuendem Material die gesamte Austrittsfläche (12) bedeckt.

5. Vorrichtung nach einem der Ansprüche 1 bis 3, bei der die Schicht (13) aus lichtstreuendem Material die Austrittsfläche (12) nur teilweise bedeckt.

6. Vorrichtung nach einem der Ansprüche 1 bis 5, wobei die Schicht (13) aus lichtstreuendem Material eine Dicke (e) von weniger als 10 mm, vorzugsweise weniger als 5 mm, aufweist.

7. Herstellungsverfahren einer Beleuchtungsvorrichtung nach einem der Ansprüche 1 bis 6, wobei :
- das Material, das den transparenten Block (10) bildet, wird eingespritzt, und dann
- eine Schicht (13) aus lichtstreuendem Material mit gegebener Dicke (e) wird durch Spritzgießen über die gesamte oder einen Teil der Austrittsfläche (12) gegossen.

8. Herstellungsverfahren nach Anspruch 7, bei dem :
- das Material, das den transparenten Block (10) bildet, wird in eine erste Form oder einen ersten Hohlraum einer Rotationsform eingespritzt und dann
- der so geformte Block (10) wird in eine zweite Form bzw. in einen zweiten Hohlraum der Rotationsform übertragen, und eine Schicht aus lichtstreuendem Material (13) wird über die gesamte oder einen Teil der Austrittsfläche (12) eingespritzt.

## Claims

1. Lighting or signaling device, in particular for motor vehicles, comprising :
- a light guide comprising a transparent or translucent block (10), comprising a light entry surface (11) and a light exit surface (12),
- one or more light sources (2) located opposite the light entry surface (11),
of the type in which the rays emitted by the light source penetrate the transparent block (10) at the light entry surface (11) and propagate directly or by successive reflections on the walls of the transparent block towards the exit surface (12) through which they emerge,
**characterized in that** the light outlet surface (12) is covered with a layer (13) overmoulded on a part of the transparent block (10), said layer (13) being composed of a light-scattering material that comprises a translucent matrix of material identical to that of the transparent block (10).

2. A device according to claim 1, in which the layer of light-scattering material is of constant thickness (e).

3. A device according to claim 1, wherein the layer of light-scattering material is of variable thickness (e).

4. A device according to one of claims 1 to 3, in which the layer (13) of light-scattering material covers the entire exit surface (12).

5. A device according to any of claims 1 to 3, in which the layer (13) of light-scattering material only partially covers the exit surface (12).

6. A device according to any of claims 1 to 5, in which the layer (13) of light-scattering material has a thickness (e) of less than 10 mm, preferably less than 5 mm.

7. A method of manufacturing a lighting device according to any one of claims 1 to 6, wherein :
- the material forming the transparent block (10) is injected, then
- a layer (13) of light-scattering material of given thickness (e) is overmoulded by injection moulding on all or part of the exit surface (12).

8. A method of manufacture according to claim 7, wherein :
- the material forming the transparent block (10) is injected into a first mould or a first cavity of a rotary mould and then,
- the block (10) thus formed is transferred into a second mould or respectively into a second cavity of said rotary mould, and a layer (13) of light-scattering material is injected over all or part of the exit surface (12).
